# EUROPEAN PATENT SPECIFICATION

(11) **EP 1 265 052 B1**
(45) Date of publication and mention of the grant of the patent: **24.01.2007**
(21) Application number: 02011725.5
(22) Date of filing: 27.05.2002
(51) Int. Cl.: G01C 17/08, G01C 17/24

(54) **Magnetic boat compass**
Magnetischer Schiffskompass
Boussole magnétique pour bateau

(30) Priority: 07.06.2001 IT GE20010052
(43) Date of publication of application: 11.12.2002
(73) Proprietor: ULTRAFLEX S.p.A., 16015 Casella (GE) (IT)
(72) Inventor: Gai, Giorgio, 16167 Genova (GE) (IT)
(74) Representative: Faraggiana, Vittorio

(56) References cited:
- EP-A- 0 227 544
- US-A- 2 903 798

## Description

The magnetic compasses commonly known essentially consist of a printed, moulded and graduated card called "compass-rose" on which one or more magnets are mounted with their magnetic axis parallel to the N-S plane, fitted on an element called "pin-box", in turn supported by a "pin". This pin is resting on a cone-shaped bearing called "stone" in hard material such as synthetic sapphire. The rose is therefore rotating and oscillating with minimal friction respect to the stone. In turn, the stone is set in the head of a pin called "pivot" supported by a floating element incorporated in the transparent cap filled with a suitable liquid. A deformable sealing membrane at the base of the cap permits volumetric expansion of the liquid at the various temperature values.

For instance there are known as technological background the documents US 2 903 798 and EP 0 227 544.

This known compass as described above, has a few drawbacks. The first of these is due to the fact that the compass rose is in opaque, i.e. non transparent material such as plastic or aluminium, so that it is difficult during the night, to read the reference data of the meridians.

A second drawback is due to the fact that a couple of magnets are normally mounted in the rose, with their axes parallel to the magnetic axis. This known solution causes an error of collimation between the N-S axis of the compass-rose graduation and the magnetic axis.

Another drawback derives from the fact that the pin-stone system supporting the rose may be damaged and malfunctioning because of shocks and vibrations of the boat.

The known complex balancing system of the rose, which is now obtained by positioning some weights kept in place by bonding agents, may also cause drawbacks.

An additional drawback is due to the fact that currently used compasses have permanent fastening systems on the boat so that their removal is difficult when the boat is left even temporarily.

This invention has the aim to eliminate the above described drawbacks and further to improve the known boat compasses, Therefore, according to this invention, the compass -rose is in semi-transparent material such as opaline polyamide and is painted by dab or negative silk screen system by which the dab covers all zones except the marks and cardinal points. The rose is lighted by a led to take night readings and its luminous rays cover the inner surface, particularly highlighting the transparent zones so as to ensure a very exact and well defined reading.

According to this invention, instead of the N-S linear magnet, a diametrically magnetised toroidal magnet is used and is shaped to ensure self-centering with respect to the N-S axis. This eliminates the above mentioned collimation defect. This magnet has also the task to keep the directional system on the pivot head.

According to this invention, the float on which the directional system bearing element is resting, can be flexibly deformed and can thus absorb the shocks and vibrations of the boat; this deformation is achieved by a large circular slot in the element.

Furthermore, according to this invention, a spring with only a few coils and provided with a rectilinear radial projecting section ensures balancing of the rose. This spring is fitted in a peripheral channel in the stem of the rose so that the operator can rotate and cut the projecting rectilinear portion to size, according to balancing requirements. A brass coil with two coils is used for exemplification.

According to this invention, the rose may also be balanced by a few circumferential pins or shanks generated inside the rose, which may be cut or other elements that may be added during the balancing phase.

According to this invention, a snap coupling and uncoupling system facilitates assembling and disassembling of the compass by means of two flanges, one of which is incorporated in the dashboard and is called "Bottom" while the other is forming the "base" of the compass and is also called "cover". This bottom is provided with two bulging mushroom shaped heads entering into matching self-locking openings in the cover. These mushroom shaped bulges have different shapings to prevent faulty assembly and one of these bulges forms the seating of the lighting led. The flange incorporated in the dashboard also acts as drilling template indicating the direction "prua-bow"

According to this invention, a calliper shaped holder revolving between 0° and 90° ensures snap coupling of the compass bottom when the latter is mounted on a sloping plane. Snap fastening and unfastening of the cover with respect to the bottom is maintained as described above.

Other characteristics of the compass, modified according to this invention, are described in the illustration of the compass in the enclosed drawings.

The compass, subject matter of this invention is illustrated in its preferred and exemplified implementation in the enclosed drawings in which:
Fig. 1 shows the vertical central section of the compass assembly,
Fig. 2 shows the vertical central section of the cushioning element supporting the directional system,
Fig. 3 shows a perspective view of the cushioning element in Fig.2,
Fig. 4 shows a top view of the flange of the compass base cover,
Fig. 5 shows a perspective view of the cover illustrated in fig. 4,

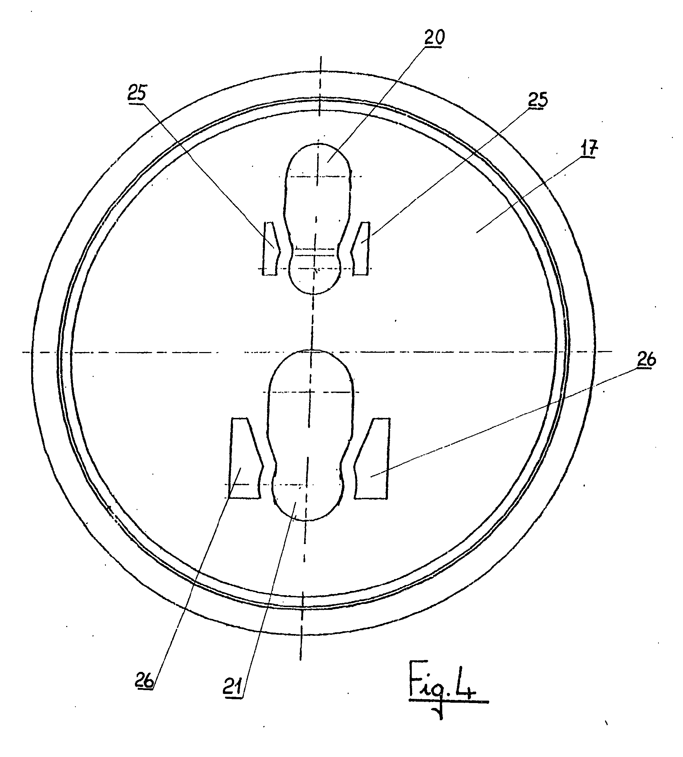

Fig. 6 shows a top view of the bottom flange fastened to the dashboard of the boat,

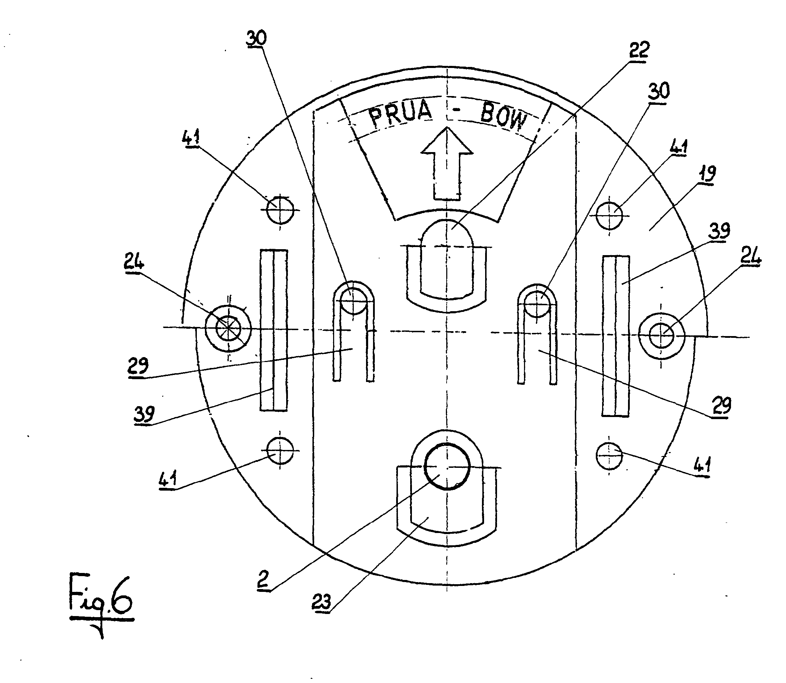

Fig. 7 shows a perspective view of the bottom flange illustrated in Fig. 6,

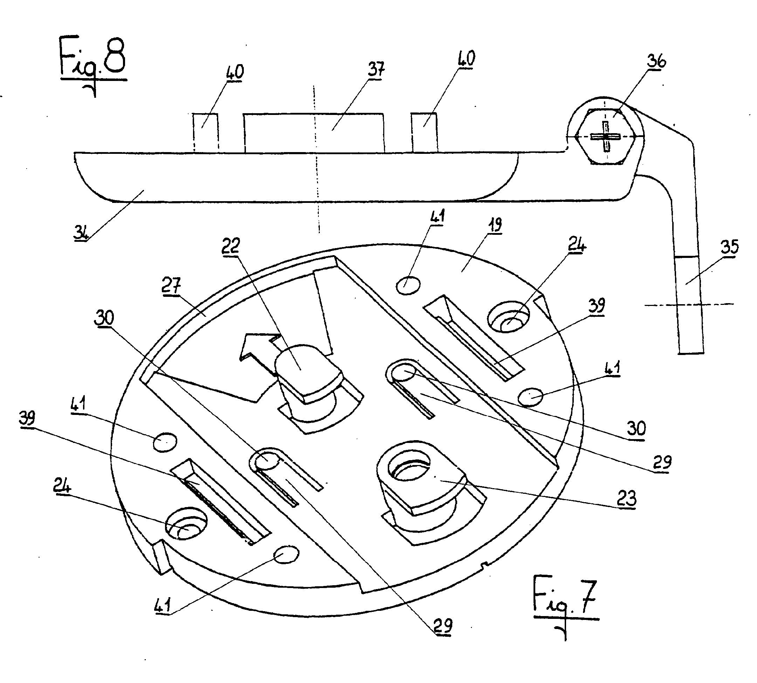

Fig. 8 shows a side view of the calliper shaped holder supporting the compass on inclined planes,

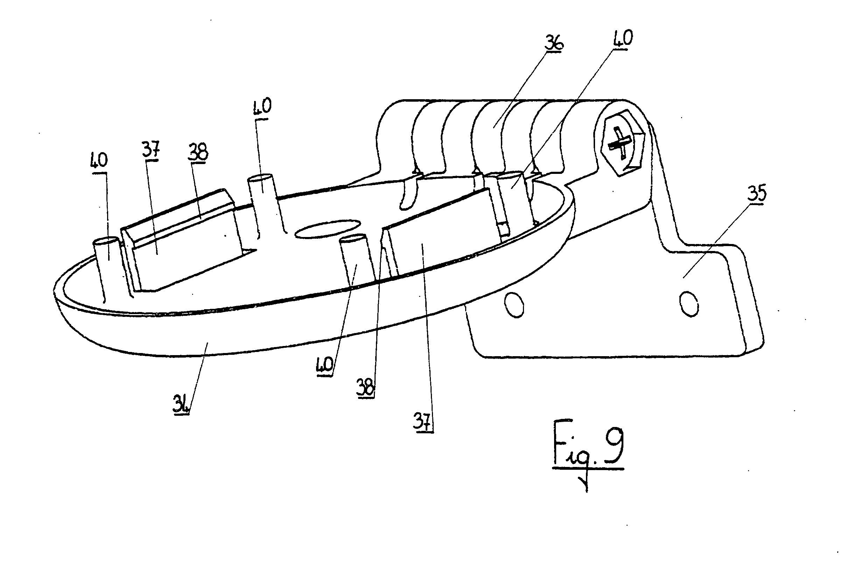

Fig. 9 shows a perspective view of the calliper shaped compass holder illustrated in Fig. 7.

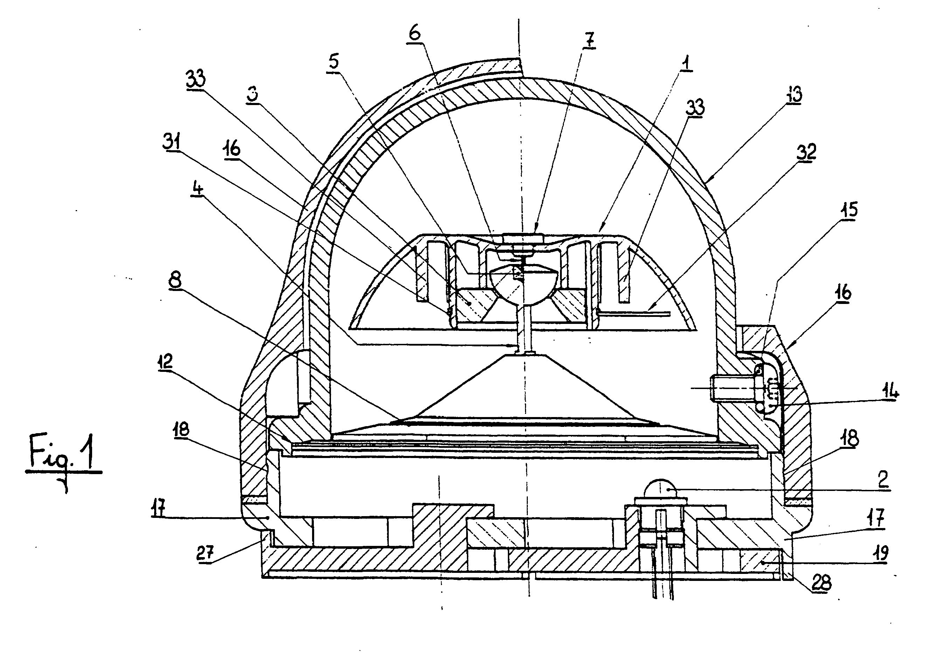

With reference to these drawings, the compass shown in Fig. 1 is consisting of a compass-rose 1 with 0° - 360° graduation, featuring the cardinal points and any other indications needed for the navigation. This rose 1, according to this invention, is made of an opaline semi-transparent material, such as for example opaline polyamide. Furthermore, this semi-transparent rose is varnished by dab or negative silk screen system so that the dab colour will cover all zones except the marks and cardinal points and any other indications or data.

The rose (1) is internally illuminated by a led 2 for taking readings at night, highlighting the transparent zones and thus ensuring an exact and well defined reading.

According to this invention, a diametrically magnetised toroidal magnet 3 is fitted in the rose (1) and is designed to ensure self-centering with respect to the N-S magnetic axis. The pivot 4 and stone 5 are acting as a support for the directional system by means of the pin 6 and pin-box 7. The adoption of the toroidal magnet 3 makes possible to eliminate the collimation error due to the N-S axis orientation of the graduation of the rose with respect to the axis of the magnetic system.

According to this invention, the float 8 has a damping or cushioning action to protect the pivot-stone assembly from being damaged by shocks and vibrations.

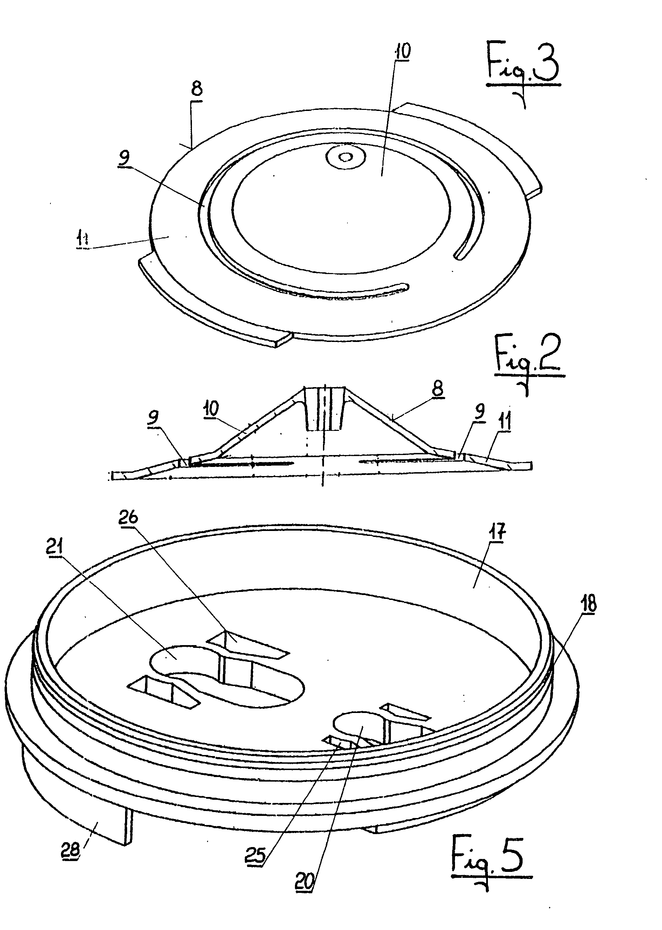

As illustrated in Fig. 2 and 3, the floating element 8 features a large circular slot 9 separating the central bearing zone 10 of the rose 1 from the peripheral zone 11 fastened to the compass frame.

A sealing membrane 12 is located below the cushioning element 8 and this membrane 12 permits drop-tight filling of the space in the transparent cap 13 and volumetric expansion of the fluid at different temperatures. A threaded plug 14 fitted with a gasket 15 permits filling the cap with liquid and its emptying.

The cap 13 is protected and partially sheathed by a covering 16 mounted on the compass base 17 by means of peripheral shaped snap couplings 18.

According to this invention, the compass may be easily fitted on and removed from the boat by a flange system, consisting of a first flange 17 called "base or cover" and a second flange 19 called "bottom". As already explained, the base 17 is secured to the covering 16 of the compass by peripheral shaped snap coupling 18 and the base 17 internally features through holes 20, 21, designed to receive and block the mushroom shaped heads 22, 23 of the bottom 19 secured to the dashboard by screws fitted in the holes 24.

As indicated in the drawings, the through holes 20, 21 and the matching mushroom heads 22, 23 are oriented on the bow-stem axis and the compass is mounted and released by pushing the base in direction of the bow andvice-versa. The through holes 20, 21 and the mushroom heads 22, 23 are differently sized to prevent assembly errors; furthermore one of the two heads, and in detail the head 23, has a central through hole in which to house the lighting led 2.

Lightening zones 25, 26 appear beside each shaped hole 20, 21 of the base 17 to facilitate the deformation of the holes and snap coupling of the shanks of the mushroom heads 22, 23. For an exact, mutual supporting assembly of the two flanges 17,19, partial peripheral shapings 27, 28 and flexible blades 29 with pushing heads 30 are provided to increase the blocking action of the mushroom heads 22, 23.

The flange 19 incorporated in the dashboard is also used as a drilling template indicating the "prua-bow" direction.

The rose (1) is balanced according to this invention, by a spring 31, in non magnetic material which is wound in two coils in a little channel inside the rose 1. One end 32 of this spring 31 is linearly projecting and the operator may rotate and cut this linear section 32 to balance the rose 1.

According to this invention, it is also possible to generate circumferential pins or shanks 33 inside the rose 1, which may be easily cut or added to balance the rose 1.

Installation of the compass on a 0 - 90° inclined planes is achieved by using a calliper shaped holder consisting of a plate 34 adjustable with respect to the base 35, to be fitted on the stationary surface of the dashboard by means of a preferably articulated finger joint 36.

This plate 34 features bulges 37 on its surface which in this example are rectilinear, with locking devices 38 fitting in or released from corresponding holes 39 drilled in the bottom 19 and features guide dowels 40 fitting in the matching holes 41 in the bottom 19. This calliper shaped holder permits exact positioning of the compass on any inclined surface.

Obviously, the compass subject matter of this invention may be modified and adjusted according to dimensional requirements and also based on its utilisation conditions.

## Claims

1. Magnetic boat compass consisting of a rose (1) provided with one or more permanent magnets (3) and a balancing system (31), this rose (1) being supported by a pin (6) resting on a stone (5) in hard material set in the head of a pivot (4) which in turn is supported by a cushioning and damping element (8), this system being housed in a transparent cap (13) closed at its base by a liquid sealing membrane (12) and partially sheathed by a covering (16), wherein the rose is made of an opaline semi-transparent product, with the semi-transparent rose (1) being covered by dab except for the marks, cardinal points and any other information or data to be read and with a led (2) being provided for lighting the rose (1) from inside through the liquid sealing membrane (12) to allow readings of the navigation data when level of ambient light is too low, **characterized in that** the magnet (3) is toroidal, diametrically magnetised and designed for self-centering with respect to the N-S magnetic axis, and the damping element (8) has a cushioning action by means of a circumferential slot (9) separating the central supporting zone (10) of the rose (1) from the peripheral zone (11) fastened to the compass frame, the compass further comprising a bottom flange (19) designed to be secured to the boat and internally featuring mushroom-shaped heads (22, 23) and a base flange (17) secured to the covering (16) of the compass and featuring internal through holes (20, 21) in which the mushroom-shaped heads (22, 23) may be received and blocked.

2. Magnetic boat compass according to claim 1, **characterized in that** the through holes (20, 21) in the base flange (17) and the mushroom-shaped heads (22, 23) in the bottom flange (19) are differently sized to prevent assembly errors.

3. Magnetic boat compass according to claim 1, **characterized in that** the lighting led (2) is housed in one (23) of the mushroom-shaped heads.

4. Magnetic boat compass according to claim 1, **characterized in that** the base flange (17) and the bottom flange (19) have respective peripheral shapings (28, 27) that are useful for exact reciprocal assembly.

5. Magnetic boat compass according to claim 1, **characterized in that** the bottom flange (19) is provided with flexible blades (29) with pushing heads (30) increasing the action of the mushroom-shaped heads (22, 23) reciprocally blocking the flanges (17, 19).

6. Magnetic boat compass according to claim 1, **characterized in that** the bottom flange (19) is incorporated in the dashboard of the boat and is also used as a drilling template for "prua-bow" direction indications.

7. Magnetic boat compass according to claim 1, **characterized in that** the balancing system of the rose (1) consists of a spring (31) lodged with some of its coils in a channel inside the rose (1), with one linearly projecting end (32) of this spring (31) that may be rotated and cut to balance the rose.

8. Magnetic boat compass according to claim 1, **characterized in that** the rose (1) is provided with circumferential pins or shanks (33) which may be suitably cut or added for balancing purposes.

9. Magnetic boat compass according to claim 1, **characterized in that** for mounting the compass on a 0-90° inclined plane there is provided a holder, consisting of a plate (34) adjustable with respect to a base (35), to be fastened to an inclined surface by means of a joint (36), the compass being mountable on that plate (34).

10. Magnetic boat compass according to claim 9, **characterized in that**, for positioning the compass on the holder, the plate (34) features bulges (37) with blocking shapings (38) fitting into matching holes (39) drilled in the bottom flange (19) and guide dowels (40) fitting into further matching holes (41) of the bottom flange (19).

## Patentansprüche

1. Magnetischer Schiffskompass, der aus einer Rose (1) besteht, die mit einem oder mehreren Permanentmagneten (3) und einem Balancesystem (31) versehen ist; diese Rose (1) wird durch einen Zapfen (6) gestützt, dieser Zapfen ist auf einen Stein (5) aus hartem Material gelehnt; dieser Stein ist in den Kopf eines Stiftes (4) gefasst, der wird wiederum durch ein gepolstertes und dämpfendes Element (8) gestützt; dieses System ist in eine durchsichtige Kugelhaube (13) eingebaut, die an ihrer Basis durch eine flüssige Dichtungsmembran (12) geschlossen wird und teilweise durch eine Verkleidung bedeckt ist, worin die Rose aus einem opalen, halbdurchsichtigen Produkt erhalten wird; diese halbdurchsichtige Rose (1) wird durch Tupfer bedeckt außer bei den Markierungen, Himmelsrichtungen und allen anderen Informationen oder Daten, die gelesen werden müssen, und sie ist mit einer LED (2) versehen, die für die Beleuchtung der Rose (1) von innen durch die flüssige Dichtungsmembran (12) vorgesehen ist, um das Lesen der Schiff-Fahrts-Daten zu ermöglichen, wenn das Niveau des umgebenden Lichtes zu schwach ist, **gekennzeichnet dadurch, dass** der Magnet (3) toriodfoermig, diametral magnetisiert und zum Selbstzentrieren in Bezug auf die magnetische N-S Achse entworfen ist; und das dämpfende Element (8) hat eine polsternde Funktion durch einen kreisförmigen Spalt (9), der den zentralen unterstützenden Bereich (10) der Rose (1) vom Randbereich (11) trennt, er ist am Kompassaufbau befestigt; der Kompass besteht außerdem aus einem Bodenflansch (19), entworfen, um am Schiff befestigt zu werden, und im Innern weist er pilzförmige Köpfe (22, 23) auf, und aus einen Basisflansch (17), der an der Kompassverkleidung (16) befestigt ist, und er hat im Innern Durchgangslöcher (20, 21), in denen die pilzförmigen Köpfe (22, 23) empfangen und blockiert werden können.

2. Magnetischer Schiffskompass gemäß Anspruch 1, **gekennzeichnet dadurch, dass** die Durchgangslöcher (20, 21) im Basisflansch (17) und die pilzförmigen Köpfe (22, 23) im Bodenflansch (19) unterschiedliche Groessen haben, um Zusammenbaufehler zu vermeiden.

3. Magnetischer Schiffskompass gemäß Anspruch 1, **gekennzeichnet dadurch, dass** die Beleuchtungs-LED (2) in einem der pilzförmigen Köpfe (23) untergebracht ist.

4. Magnetischer Schiffskompass gemäß Anspruch 1, **gekennzeichnet dadurch, dass** der Basisflansch (17) und der Bodenflansch (19) jeweils Randformen(28, 27) haben, die für ein genaues gegenseitiges Zusammensetzen dienen.

5. Magnetischer Schiffskompass gemäß Anspruch 1, **gekennzeichnet dadurch, dass** der Bodenflansch (19) mit elastischen Blättern (29) mit stoßenden Köpfen (30) versehen ist; diese vermehren die Aktion der pilzförmigen Köpfe (22, 23), indem sie die Flansche (17, 19) gegenseitig blockieren.

6. Magnetischer Schiffskompass gemäß Anspruch 1, **gekennzeichnet dadurch, dass** der Bodenflansch (19) in das Armaturenbrett des Schiffes eingebaut ist und wird auch als Bohrschablone für die "prua-bow" (Bug) Richtungsangaben benutzt.

7. Magnetischer Schiffskompass gemäß Anspruch 1, **gekennzeichnet dadurch, dass** das Balancesystem der Rose (1) aus einer Feder (31) besteht, die mit einigen ihrer Spiralen in einem Kanal innerhalb der Rose (1) untergebracht ist, mit einem geradlinig hervorragenden Ende (32) dieser Feder (31), das gedreht und geschnitten werden kann, um die Rose zu balancieren.

8. Magnetischer Schiffskompass gemäß Anspruch 1, **gekennzeichnet dadurch, dass** die Rose (1) mit im Kreis angebrachten Stiften oder Bolzen (33) versehen ist, die für Ausbalancierzwecke passend abgeschnitten oder hinzugefügt werden können.

9. Magnetischer Schiffskompass gemäß Anspruch 1, **gekennzeichnet dadurch, dass** für das Montieren des Kompasses auf einer von 0°-90° geneigten Fläche ein Halter vorgesehen ist, der aus einer Platte (34) besteht, die hinsichtlich der Basis (35) regulierbar und an einer geneigten Oberfläche des Armaturenbretts durch ein Gelenk (36) befestigt ist, und der Kompass wird auf diese Platte (34) montiert.

10. Magnetischer Schiffskompass gemäß Anspruch 9, **gekennzeichnet dadurch, dass** für das Anbringen des Kompasses am Halter die Platte (34) Vorsprünge (37) mit Sperrvorrichtungen (38) aufweist, die in die entsprechenden, in den Bodenflansch (19) gebohrten Löcher (39) passen, und Führungsdübel (40), die in weitere entsprechende Löcher (41) des Bodenflansches (19) passen.

## Revendications

1. Compas de navigation magnétique consistant en une rose (1) fournie avec un ou plusieurs aimants permanents (3) et un système d'équilibrage (31), cette rose (1) étant soutenue par un'épingle (6) placée sur une pierre (5) en matière dure située dans la tête d'un pivot (4) qui à son tour est soutenue par un élément d'amortissement et d'atténuation (8), ce système étant logé dans une calotte transparente (13) fermée à sa base par une membrane de tenue liquide (12) et enveloppée partiellement par un capot (16), la rose étant faite dans une matière opaline semi transparente, avec une rose semi transparente (1) recouverte de peinture, à l'exception des repères, des points cardinaux et de toute autre information ou donnée devant être relevée et avec une led (2) prévue pour éclairer l'intérieur de la rose (1) à travers la membrane de tenue liquide (12) pour permettre les relèvements des données de navigation quand le niveau de la lumière environnante est trop faible, **caractérisé par le fait que** l'aimant (3) est toroïdal diamétralement magnétisé, et conçu pour l'auto-centrage par rapport à l'axe magnétique N-S et l'amortissement (8) exerce une action d'atténuation au moyen d'une fente circonférentielle (9) séparant la zone de support centrale (10) appartenant à la rose (1) de la zone périphérique (11) accrochée au cadre du compas, le compas comportant, de plus, une flasque de siège (19) conçue pour être fixée au bateau et disposant intérieurement de têtes à forme de tête de champignon (22) et (23), ainsi qu'une flasque de base (17) fixée au capot (16) du compas et comportant des trous de passage internes (20), (21) dans lesquels les têtes à forme de tête de champignon (22), et (23) peuvent être insérées et bloquées.

2. Compas de navigation magnétique, selon la revendication 1, **caractérisé par le fait que** les trous de passage (20) et (21) dans la flasque de base (17) et les têtes à forme de tête de champignon (22) et (23) dans la flasque de siège (19) présentent des tailles différentes afin d'éviter les erreurs d'assemblage.

3. Compas de navigation magnétique, selon la revendication 1, **caractérisé par le fait que** la led d'éclairage (2) est logée dans l'une des têtes à forme de tête de champignon (23).

4. Compas de navigation magnétique, selon la revendication 1, **caractérisé par le fait que** la flasque de base (17) et la flasque de siège (19) ont des troussages périphériques correspondants (28) et (27) qui sont utiles pour un assemblage réciproque exact.

5. Compas de navigation magnétique, selon la revendication 1, **caractérisé par le fait que** la flasque de siège (19) est pourvue d'ailettes flexibles (29) avec des têtes de poussée (30) ce qui améliore l'action des têtes à forme de tête de champignon (22) et (23), qui bloquent réciproquement les flasques (17) et (19).

6. Compas de navigation magnétique, selon la revendication 1, **caractérisé par le fait que** la flasque de siège (19) est incorporée dans le tableau de bord du bateau et est aussi utilisée comme gabarit de forage pour les indications de la direction «proue-bow».

7. Compas de navigation magnétique, selon la revendication 1, **caractérisé par le fait que** le système d'équilibrage de la rose (1) consiste en un ressort (31) dont certaines de ses spires sont placées dans un canal à l'intérieur de la rose (1), avec une des extrémités (32) de ce ressort (31) se projette linéairement, pouvant ainsi être tournée et coupée dans le but d'équilibrer la rose.

8. Compas de navigation magnétique, selon la revendication 1, **caractérisé par le fait que** la rose (1) est pourvue de tiges ou aiguilles circonférentielles (33) pouvant être opportunément coupées ou ajoutées selon les besoins de l'équilibrage.

9. Compas de navigation magnétique, selon la revendication 1, **caractérisé par le fait qu'**un support est prévu pour installer le compas sur une surface inclinée 0-90°, où ce support consiste en une plaque (34) réglable en fonction de la base (35), devant être fixée sur la surface inclinée au moyen d'un joint (36), où le compas peut être monté sur cette plaque (34).

10. Compas de navigation magnétique, selon la revendication 9, **caractérisé par le fait que** la plaque (34) servant à positionner le compas sur le support, comporte des saillies (37) avec des troussages (38) pour le blocage qui sont insérées dans les trous correspondants (39) forés sur la flasque de siège (19) et des goujons de guidage (40) sont insérés dans les trous correspondants supplémentaires (41) de la flasque de siège (19).
